(19)

Europäisches
Patentamt
European
Patent Office
Office européen
des brevets

(11) EP 2 829 642 A1

(12) EUROPEAN PATENT APPLICATION
published in accordance with Art. 153(4) EPC

(43) Date of publication:
28.01.2015 Bulletin 2015/05

(51) Int Cl.:
D01F 6/70 (2006.01)          C08G 18/75 (2006.01)
D04B 21/00 (2006.01)

(21) Application number: 12858566.8

(22) Date of filing: 12.12.2012

(86) International application number:
PCT/JP2012/082201

(87) International publication number:
WO 2013/089137 (20.06.2013 Gazette 2013/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 16.12.2011 JP 2011275513

(71) Applicant: Toray Opelontex Co., Ltd
Chuo-ku, Tokyo 103-0023 (JP)

(72) Inventors:
• ITOH, Shingo
  Otsu-shi
  Shiga 520-8558 (JP)
• TANAKA, Toshihiro
  Otsu-shi
  Shiga 520-8558 (JP)

(74) Representative: Teipel, Stephan et al
Lederer & Keller
Patentanwälte Partnerschaft mbB
Unsöldstrasse 2
80538 München (DE)

(54) **ELASTIC POLYURETHANE FIBER AND METHOD FOR MANUFACTURING SAME**

(57) An object of the present invention is to provide a polyurethane elastic fiber having excellent mechanical characteristics, particularly excellent stress characteristics in the region of 100 to 200% elongation which is the region of actual use, while containing an organic diisocyanate compound excellent in yellowing resistance. The object is achieved by a polyurethane elastic fiber containing a polyurethane polymerized from a polyol, an organic diisocyanate compound, and a diol compound, wherein the organic diisocyanate compound contains at least 1,4-bis(isocyanatomethyl)cyclohexane, and the trans/cis isomer ratio of the 1,4-bis(isocyanatomethyl)cyclohexane is 70/30 to 95/5.

EP 2 829 642 A1

**Description**

TECHNICAL FIELD

The present invention relates to a polyurethane elastic fiber. More particularly, the present invention relates to a polyurethane elastic fiber having excellent mechanical characteristics while containing an organic diisocyanate compound excellent in yellowing resistance, and a method for manufacturing the fiber.

BACKGROUND ART

Elastic fibers are used in a wide variety of applications including uses for stretchable clothes such as legwear, innerwear and sportswear, sanitary articles (sanitary materials) such as disposable diapers and sanitary napkins, and industrial materials because of their excellent stretchability.

Among the elastic fibers, polyurethane elastic fibers have high breaking strength and elongation, high elastic recovery force, excellent heat resistance, and suitable heat setting property; thus, recently they have been more widely used in combination with natural fibers such as cotton or wool, semisynthetic fibers or synthetic fibers such as nylon or polyester yarns.

Generally, in polyurethane elastic fibers, an aromatic diisocyanate compound, particularly tolylene diisocyanate (TDI) or 4,4'-diphenylmethane diisocyanate (MDI) is frequently used as a raw material because it gives excellent mechanical characteristics. However, the major problem is that an aromatic ring of the compound causes photooxidative degradation, which results in the stress reduction and the yellowing of fibers. Countermeasures have been taken against the problem, including the addition of various stabilizers to the polyurethane elastic fibers, but their effects last only for a limited period of time, and therefore may be insufficient to solve the problem.

On the other hand, use of an aliphatic or alicyclic diisocyanate compound is known to be effective for suppressing the stress reduction or yellowing associated with photooxidative degradation of a polyurethane, and such a compound is widely used in applications of polyurethane coatings and adhesives. As polyurethane elastic fibers, there are disclosed, for example, a polyurethane elastic fiber made of a polycarbonate diol derived from 1,6-hexanediol or a polycarbonate diol derived from 1,6-hexanediol and a modified polycarbonate diol derived from different diol, an alicyclic diisocyanate, and a diamine compound, the fiber having good durability and soft stretchability (Patent Document 1); and a polyurethane elastic fiber prepared by using, as an aliphatic or alicyclic diisocyanate compound, 1,6-hexane diisocyanate, 1,4-butane diisocyanate, 1,4-cyclohexane diisocyanate, 4,4'-dicyclohexylmethane diisocyanate, isophorone diisocyanate, tetramethylxylylene diisocyanate (TMXDI) or dimeryl diisocyanate, or a mixture of these diisocyanates (Patent Document 2).

PRIOR ART DOCUMENTS

PATENT DOCUMENTS

Patent Document 1: JP-A-H10-226921
Patent Document 2: JP-A-2002-517533

SUMMARY OF THE INVENTION

PROBLEMS TO BE SOLVED BY THE INVENTION

However, the fibers as described above have problems that an aliphatic or alicyclic diisocyanate compound has a structure with high steric hindrance, which causes intermolecular interaction to be weakened, leading to the reduction in mechanical characteristics of the fiber, especially in mechanical strength in case of 100 to 200% elongation, which is the actual elongation when the fiber is formed into a fabric or the like for actual use.

Specifically, Patent Document 1 describes that the fiber excellent in soft stretchability is provided when the ratio of the stress to the breaking strength at 100% elongation is 0.020 to 0.070 and the ratio of the stress to the breaking strength at 200% elongation is 0.035 to 0.150, while comparison of the stress values between examples and comparative examples in Patent Document 1 indicates that the stress in the product formed using an alicyclic diisocyanate is only about 50 to 60% of the stress given by using an aromatic diisocyanate compound, suggesting that the steric hindrance causes the reduction in the mechanical strength.

Similarly, Patent Document 2 describes that the polyurethane elastic fiber produced using an aliphatic diisocyanate compound is generally poor in the mechanical characteristics, particularly in toughness. Specifically, the document describes a polyurethane elastic fiber prepared using isophorone diisocyanate in examples. The isophorone diisocyanate has adjacent methyl groups and isocyanate groups at meta positions with bent structures, and thus has larger steric hindrance and gives weaker intermolecular interaction compared to 4,4'-methylenebis(cyclohexyl isocyanate) used in examples in Patent Document 1 (the same compound as 4,4'-dicyclohexylmethane diisocyanate in Patent Document 2). It is therefore easy to infer that the fiber is poor in the mechanical characteristics in the region of actual elongation as with the case of Patent Document 1.

The present invention is intended to provide a polyurethane elastic fiber having excellent mechanical characteristics, particularly excellent stress characteristics in the region of 100 to 200% elongation which is the region of actual use, while containing a diisocyanate compound excellent in yellowing resistance.

MEANS FOR SOLVING THE PROBLEMS

For solving the problems described above, the present invention provides any of the following means.

(1) A polyurethane elastic fiber containing a polyurethane polymerized from a polyol, an organic diisocyanate compound, and a diol compound, wherein the organic diisocyanate compound contains at least 1,4-bis(isocyanatomethyl)cyclohexane, and the trans/cis isomer ratio of the 1,4-bis(isocyanatomethyl)cyclohexane is 70/30 to 95/5.
(2) The polyurethane elastic fiber according to (1), wherein the polyol is a polyether polyol.
(3) The polyurethane elastic fiber according to (1) or (2), wherein the diol compound contains at least ethylene glycol or 1,4-butanediol.
(4) A polyurethane elastic fiber containing a polyurethane having a structure that can be formed by polymerizing a polyol, an organic diisocyanate compound, and a diol compound, wherein the structure of a part that can be derived from the organic diisocyanate compound is a structure that can be formed from an organic diisocyanate compound containing at least 1,4-bis(isocyanatomethyl)cyclohexane having a trans/cis isomer ratio of 70/30 to 95/5.
(5) The polyurethane elastic fiber according to (4), wherein the structure of a part that can be derived from the polyol is a structure that can be formed from a polyether polyol.
(6) The polyurethane elastic fiber according to (4) or (5), wherein the structure of a part that can be derived from the diol compound includes at least a structure that can be formed from ethylene glycol or 1,4-butanediol.
(7) The polyurethane elastic fiber according to any one of (1) to (6), wherein the polyurethane has a weight average molecular weight of 50, 000 to 200, 000 in terms of polystyrene.
(8) A method for manufacturing a polyurethane elastic fiber, the method comprising polymerizing a polyol, an organic diisocyanate compound, and a diol compound to prepare a polyurethane, and spinning the polyurethane to obtain a polyurethane elastic fiber, wherein at least 1,4-bis(isocyanatomethyl)cyclohexane is used as the organic diisocyanate compound, and the trans/cis isomer ratio of the 1,4-bis(isocyanatomethyl)cyclohexane is 70/30 to 95/5.
(9) The method according to (8), wherein the equivalent ratio (molar ratio) of the polyol to the organic diisocyanate compound in the reaction is 1 : 1.5 to 1 : 4.5.
(10) The method according to (8) or (9), wherein the polyurethane is prepared by a solution polymerization method, and a spinning dope having a polyurethane concentration of 20 to 50 weight% is spun into the polyurethane elastic fiber.
(11) An elastic fabric including the polyurethane elastic fiber recited in any one of (1) to (7), or the polyurethane elastic fiber manufactured by the method recited in any one of (8) to (10).

EFFECT OF THE INVENTION

According to the present invention, there is provided a polyurethane elastic fiber having excellent mechanical characteristics, particularly excellent stress characteristics in the region of 100 to 200% elongation which is the region of actual use, while containing an alicyclic diisocyanate compound excellent in yellowing resistance.

MODE FOR CARRYING OUT THE INVENTION

The present invention will be described in more detail below.

The polyurethane elastic fiber of the present invention contains a polyurethane polymerized from a polyol, an organic diisocyanate compound, and a diol compound, and the organic diisocyanate compound contains at least 1,4-bis(isocyanatomethyl)cyclohexane. The trans/cis isomer ratio of the 1,4-bis(isocyanatomethyl)cyclohexane, which is used as the organic diisocyanate compound in polymerization of the polyurethane, is within the range of 70/30 to 95/5, preferably 75/25 to 90/10, more preferably 80/20 to 85/15. By using the 1,4-bis(isocyanatomethyl)cyclohexane having the trans/cis isomer ratio that is within the specific range as above, there is produced a polyurethane elastic fiber which exhibits excellent stress and recovery force at 100 to 200% elongation which is in the region of actual use, and also has excellent heat resistance.

For the organic diisocyanate compound, a different diisocyanate compound may be used in combination as far as the characteristics given by 1,4-bis(isocyanatomethyl)cyclohexane are not impaired. Examples of the different diisocyanate compound usable in the present invention include aromatic diisocyanate compounds such as 4,4'-diphenylmethane diisocyanate, tolylene diisocyanate, 1,4-diisocyanatobenzene, xylylene diisocyanate, and 1,5-naphthalene diisocyanate, and aliphatic or alicyclic diisocyanate compounds such as 1,6-hexane diisocyanate, 1,4-butane diisocyanate, 1,4-cyclohexyl diisocyanate, 4,4'-dicyclohexylmethane diisocyanate, isophorone diisocyanate, and tetramethylxylylene diisocyanate (TMXDI). In this case, the content ratio of the different diisocyanate compound is preferably 5 mol% or less relative to the organic diisocyanate compound.

The polyol may be any of polyether, polyester and polycarbonate polyols. A mixture of two or more of the polyols may be used, or a copolymerized polyol also may be used. From the viewpoint of imparting the elongation and the flexibility to a yarn, a polyether polyol is preferable.

Examples of the polyether polyol include polyethylene oxide, polyethylene glycol, a polyethylene glycol derivative, polypropylene glycol, polytetramethylene ether glycol (hereinafter, referred to as PTMG), modified PTMG (hereinafter, referred to as 3M-PTMG) which is a copolymer of tetrahydrofuran (hereinafter, referred to as THF) and 3-methyltetrahydrofuran, modified PTMG which is a copolymer of THF and 2, 3-dimethyl THF, a polyol having side chains on both sides as disclosed in, for example, Japanese Patent No. 2615131, and a random copolymer in which THF and ethylene oxide and/or propylene oxide are randomly arranged. One of these may be used alone, or alternatively a polyol having a structure obtained by mixing or copolymerizing two or more of them may be used. From the viewpoint of the yarn strength and elongation and the recovery force, it is preferable to use PTMG, 3M-PTMG or a polyol obtained by blending the two. Another polyol may be mixed or copolymerized with PTMG, 3M-PTMG or a polyol obtained by blending the two as far as their characteristics are not impaired.

The polyol preferably has a number average molecular weight of 1,000 to 5,000 since a yarn produced using the polyol has excellent elongation, strength, elastic recovery force and heat resistance. More preferably, the polyol has a number average molecular weight of 1,500 to 3,500. By using such a polymeric diol having a molecular weight within the above range, there is produced an elastic fiber having excellent elongation, strength, elastic recovery force and heat resistance.

In the polyurethane elastic fiber of the present invention, a diol compound is used as a chain extender. Examples of the diol compound include aliphatic glycols having 2 to 8 carbon atoms such as ethylene glycol, propylene glycol, 1,3-propanediol, 1,3-butylene glycol, 1,4-butanediol, 1,6-hexanediol, diethylene glycol, and neopentyl glycol, alicyclic diols having 6 to 10 carbon atoms such as 1,4-cyclohexanediol and 1,4-bis(hydroxymethyl)cyclohexane, and aromatic ring-containing diols having 8 to 20 carbon atoms such as xylylene glycol, bis(hydroxyethyl)benzene, bis(hydroxyethoxy)benzene, and an ethylene oxide adduct of bisphenol A. These may be used alone or as a mixture of two or more of them. Preferably an aliphatic diol is used. From the viewpoint of production of an elastic fiber that is excellent in heat resistance and strength even though the polymer is extended by a diol compound, ethylene glycol or 1,4-butanediol is more preferred to be contained as the diol compound.

The polyurethane contained in the polyurethane elastic fiber of the present invention is, as described above, a polyurethane polymerized from a polyol, an organic diisocyanate compound, and a diol compound (these may be herein collectively called raw materials of a polyurethane). However, as far as the polyurethane has a structure that can be formed by polymerizing the above-mentioned raw materials of a polyurethane, the raw material and/or method for preparing the polyurethane are not necessarily limited to those described above. Accordingly, the polyurethane elastic fiber of the present invention contains a polyurethane having a structure that can be formed by polymerizing a polyol, an organic diisocyanate compound, and a diol compound.

Similarly, about structures of respective parts that can be derived from a polyol, an organic diisocyanate compound, and a diol compound, as far as the polyurethane includes structures that can be formed therefrom, the structures do not need to be formed by polymerization of the above-mentioned raw materials. It should be noted that the material names are used herein just for the purpose of illustration about the structure of the polyurethane. Thus, for the reasons as described above, the polyurethane elastic fiber of the present invention contains a polyurethane having a structure that can be formed by polymerizing a polyol, an organic diisocyanate compound, and a diol compound, wherein the structure of a part that can be derived from the organic diisocyanate compound is a structure that can be formed from the organic diisocyanate compound containing at least 1,4-bis(isocyanatomethyl)cyclohexane having a trans/cis isomer ratio of 70/30 to 95/5. Thus, in the polyurethane elastic fiber of the present invention, for the reasons as described above, the structure of a part that can be derived from the polyol is preferably a structure that can be formed from a polyether polyol.

In the present invention, the polyurethane preferably has a weight average molecular weight of 50,000 to 200,000 so that the resulting fiber may be enhanced in durability and strength. The weight average molecular weight is herein expressed in terms of polystyrene measured by GPC. As to the weight average molecular weight of the polyurethane, the measurement is made according to the method described in Examples.

In the present invention, the polyurethane preferably has a Shore A hardness of 70 to 90, more preferably 80 to 90, even more preferably 85 to 90 so that the resulting fiber may be enhanced in durability and strength.

Next, the method for manufacturing a polyurethane elastic fiber will be described in detail.

In the present invention, the polyurethane elastic fiber may be spun by any known method such as a wet spinning method, a melt spinning method or a dry spinning method. From the viewpoint of the productivity or the characteristics of the resulting elastic fiber, dry or melt spinning of a polyurethane is preferred.

The method for polymerization of a polyurethane is not particularly limited, and may be a melt polymerization or solution polymerization method. In the case of a solution polymerization method, there is an advantage of less frequent occurrence of contamination such as gel produced in the polyurethane.

Also the reaction process is not particularly limited, and may be any known process. In the case of a melt polymerization method, an example of the reaction process is a one-shot process in which a polyol, an organic diisocyanate compound, and a diol compound are charged into an extruder, heated to an appropriate temperature and allowed to react. In the case of solution polymerization method, examples of the process are: a one-shot process in which a polyol, an organic diisocyanate compound, and a diol compound are added into a solvent such as dimethylacetamide (DMAc), dimethylformamide (DMF), dimethyl sulfoxide (DMSO) or N-methylpyrrolidinone (NMP) or a solvent containing one of them as a main component, the materials are dissolved therein, then heated to an appropriate temperature and allowed to react; or a prepolymer technique in which a polyol is initially reacted with an organic diisocyanate compound in the absence of a solvent to prepare a prepolymer, subsequently the prepolymer is dissolved in a solvent and reacted with a diol compound for chain extension to synthesize a polyurethane.

In the case of solution polymerization, a chain terminating agent is preferably used in combination for the purpose of controlling the molecular weight of the resulting polyurethane. Examples of the chain terminating agent include monoamine compounds such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine and diamylamine, and monoalcohol compounds such as ethanol, propanol, butanol, isopropanol, allyl alcohol, and cyclopentanol. The terminating agent preferably used is a monoamine compound, more preferably diethylamine. Generally the terminating agent is added after the polyurethane is allowed to have a high molecular weight by using a chain extender.

In the polymerization of a polyurethane, an amine catalyst, an organometallic catalyst or other catalysts may be used alone or as a mixture of two or more.

Examples of the amine catalyst include N,N-dimethylcyclohexylamine, N,N-dimethylbenzylamine, triethylamine, N-methylmorpholine, N-ethylmorpholine, N,N,N',N'-tetramethylethylenediamine, N,N,N',N'-tetramethyl-1,3-propanediamine, N,N,N',N'-tetramethylhexanediamine, bis-2-dimethylaminoethylether, N,N,N',N'-pentamethyldiethylenetriamine, tetramethylguanidine, triethylenediamine, N,N'-dimethylpiperazine, N-methyl-N'-dimethylaminoethyl-piperazine, N-(2-dimethylaminoethyl)morpholine, 1-methylimidazole, 1,2-dimethylimidazole, N,N-dimethylaminoethanol, N,N,N'-trimethylaminoethylethanolamine, N-methyl-N'-(2-hydroxyethyl)piperazine, 2,4,6-tris(dimethylaminomethyl)phenol, N,N-dimethylaminohexanol, and triethanolamine.

Examples of the organometallic catalyst include tin octanoate, dibutyltin dilaurate, dibutyl lead octanoate, and bismuth octanoate.

The equivalent ratio (molar ratio) of the polyol to the organic diisocyanate compound in the reaction is preferably 1 : 1.5 to 1 : 4.5. When the ratio is within this range, the resulting elastic fiber is excellent in processability as well as in the strength and elongation and the recovery force. The equivalent ratio in the reaction is preferably 1 : 2.0 to 1 : 4.0, more preferably 1 : 2.0 to 1 : 3.5.

In the case where the polyurethane is prepared by solution polymerization and then spun, the concentration of the polyurethane in a polyurethane dope used for the spinning (hereinafter also referred to as spinning dope) is not particularly limited, and is preferably 20 to 50% by weight in view of the molecular weight of the polyurethane, the viscosity of the solution, and the stretchability of the resulting elastic fiber. The concentration is more preferably 30 to 50% by weight, even more preferably 35 to 45% by weight.

In the present invention, the polyurethane elastic fiber may contain the following: for use as an ultraviolet absorber, an antioxidant, a gas-resistant stabilizer or the like, a hindered phenol-based agent such as so-called BHT or "Sumilizer" (registered trademark) GA-80 manufactured by Sumitomo Chemical Co., Ltd., a benzotriazole-based agent such as "Tinuvin" (registered trademark) of various types, a phosphorus-based agent such as "Sumilizer" P-16 manufactured by Sumitomo Chemical Co., Ltd., or a hindered amine-based agent such as "Tinuvin" of various types; further, an inorganic pigment such as titanium oxide, zinc oxide or carbon black; metal soap such as magnesium stearate; a germicide or deodorant including silver, zinc, compounds based on them or the like; a lubricant such as silicone or a mineral oil; or an antistatic agent of various types such as barium sulfate, cerium oxide, betaine or a phosphoric acid-based agent. Especially, in order to further enhance the durability against light, various nitrogen oxides or the like, it is preferred to use a nitrogen oxide scavenger such as HN-150 manufactured by Japan Hydrazine Company, Inc., a thermal oxidation stabilizer such as "Sumilizer" GA-80 manufactured by Sumitomo Chemical Co., Ltd., or a light stabilizer such as "Sumisorb" (registered trademark) 300#622 manufactured by Sumitomo Chemical Co., Ltd., for example.

These agents only needs to be mixed with the polyurethane for spinning, and any method may be employed for mixing thereof. As a typical mixing method, for example, a method in which mixing and kneading are performed simultaneously with melt polymerization, or if solution polymerization is applied, a method in which an agent is added to a spinning dope (solution) and the solution is mixed and stirred using a static mixer may be employed.

By weaving or knitting the polyurethane elastic fiber of the present invention or a fiber, including the polyurethane elastic fiber obtained from the manufacturing method of the present invention, or forming a nonwoven fabric from the fiber, there is provided an elastic fabric having excellent stretchability. Because of its excellent stretchability, the elastic fabric can be preferably applied for stretchable clothes such as legwear, innerwear and sportswear, sanitary articles (sanitary materials) such as disposable diapers and sanitary napkins, and industrial materials.

EXAMPLES

The present invention will be described in further detail with reference to examples below, but these examples should not be construed as limiting the invention.

(Determination of Molecular Weight of Polyurethane)

The weight average molecular weight (hereinafter also referred to as Mw) of the polyurethane was determined using "LC solution" system available from Shimadzu Corporation and a column Shodex KD-80 manufactured by Showa Denko K.K. as a preparative column. Dimethylacetamide (DMAc) was used as a carrier, and standard polystyrene was used as a reference material for molecular weight. A sample used for the determination was prepared by diluting the polymerized polymer with DMAc.

(Determination of Hardness of Polyurethane)

The Shore A hardness of the polyurethane was determined according to JIS K7311:1995 "Testing methods for thermoplastic polyurethane elastomers." The obtained results are shown by numerical values.

(Determination of Stress and Recovery Force of Polyurethane Elastic Fiber)

The stress and the recovery force of the polyurethane elastic fiber were determined using Instron Model 5500 Tensile Tester. Specifically, a specimen having a length of 5 cm (L1) was elongated at a tension rate of 50 cm/min to 300% elongation, and this operation was repeated five times. At this time, the stress was measured at 100% and 200% elongations in the first operation, and at 100% and 200% elongations in the fifth operation. After the fifth operation, the specimen was kept at a length of 300% elongation for 30 seconds to determine the stress of the specimen after kept elongated for 30 seconds (i.e. the recovery force). In this way, the operations of elongation of 300%, keeping and restoring were repeated five times, after which the specimen was elongated until it was broken in the sixth elongation. Then, the stress at break (breaking strength) and the length at break (L2) of the specimen were measured and the breaking elongation was calculated by the following expression. The measurement was carried out at respective levels five times, and the average value was calculated.

$$\texttt{Breaking elongation (\%) = 100} \times \texttt{((L2 - L1)/L1)}$$

(Determination of Softening Point Temperature of Polyurethane Elastic Fiber)

The softening point of the polyurethane elastic fiber was determined by analyzing the polyurethane elastic fiber using a viscoelasticity analyzer RSA-II manufactured by Rheometric Scientific, Inc. Specifically, the determination was carried out in such a manner that the polyurethane elastic fiber was set between chucks with a certain tension, the temperature was increased from 25°C to 250°C, and the inflexion point of the storage elastic modulus was determined.

(Evaluation of Surface Quality of Elastic Fabric)

A two-way half tricot with 11 wales/inch and 25 courses/inch on a machine was produced by an ordinary knitting method, which tricot was made of 85 weight% of nylon filaments (24 decitex, 7 filaments) and 15 weight% of the polyurethane elastic fiber (20 decitex), and this was used as gray fabric. The obtained gray fabric was subjected to scouring at 80°C for 10 minutes and preset at 170°C for 60 seconds. The resulting elastic fabric was dyed by jet-dyeing at 98°C using Kayanol Milling Blue 2RW at a concentration of 1.0% owf. The surface quality of the resultant dyed elastic fabric was observed visually or at an enlargement magnification. The assessment was made by five persons according to the criteria as described below. For the assessment, the most frequent value (the most frequent judgment) was employed. When the judgments were different such as 2-2-1, the surface quality was to be classified as B in any case.

A: Streak shades are not found even in the observation at an enlargement magnification.
B: Streak shades can be found in the observation at an enlargement magnification.
C: Streak shades can be clearly found in the visual observation.

(Example 1)

In a nitrogen gas stream, 500 g of polytetramethylene ether glycol (PTMG) having a molecular weight of 2,000 was reacted with 145.50 g of 1,4-bis(isocyanatomethyl)cyclohexane (H6XDI) with a trans/cis ratio of 80/20 at 100°C for 3 hours in the absence of a solvent to give a prepolymer (Equivalent ratio between the polyol and the organic diisocyanate compound in the reaction (R value) = 3).

640 g of the obtained prepolymer was dissolved in 1246 g of DMAc, 30.74 g of ethylene glycol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight % was obtained. The weight average molecular weight of the obtained polyurethane was 161,000 in terms of polystyrene.

To this polyurethane polymer solution, a polyurethane solution produced by reaction of t-butyldiethanolamine with methylene-bis-(4-cyclohexyl isocyanate) and a polymer of p-cresol with divinylbenzene were mixed in a weight ratio of 2 : 1, and DMAc was added thereto to prepare an additive solution of 35 weight %.

A mixture of 96 parts by weight of the polyurethane polymer solution and 4 parts by weight of the additive solution was prepared and used as a spinning dope. The spinning dope was used to perform dry spinning at a speed of 520 m/min while the speed ratio between a Godet roller and a winder was set at 1.42 to obtain a yarn of 20 DTEX. The properties of the obtained yarn and the surface quality of the resultant elastic fabric are shown in Table 1.

(Example 2)

A polyurethane polymer solution was prepared under the same conditions as in Example 1 except that the trans/cis ratio of H6XDI was 85/15. The weight average molecular weight of the obtained polyurethane was 154, 000 in terms of polystyrene. The polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 1.

(Example 3)

In a nitrogen gas stream, 500 g of polytetramethylene ether glycol (PTMG) having a molecular weight of 2,000 was reacted with 169.75 g of H6XDI with a trans/cis ratio of 80/20 at 100°C for 3 hours in the absence of a solvent to give a prepolymer (R value = 3.5).

665 g of the obtained prepolymer was dissolved in 1306 g of DMAc,, 38.48 g of ethylene glycol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 139,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 1.

(Example 4)

In a nitrogen gas stream, 475 g of polytetramethylene ether glycol (PTMG) having a molecular weight of 2,000 was reacted with 161.26 g of H6XDI with a trans/cis ratio of 80/20 at 100°C for 3 hours in the absence of a solvent to give a prepolymer (R value = 3.5).

635 g of the obtained prepolymer was dissolved in 1278 g of DMAc, 53.33 g of 1,4-butanediol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 143,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 1.

(Example 5)

In a nitrogen gas stream, 490 g of copolymerized PTMG (3M-PTMG) having molecular weight of 2,000 produced by copolymerizing THF and 3-methyl-THF in a molar ratio of 85/15 was reacted with 166.36 g of H6XDI with a trans/cis ratio of 80/20 at 100°C for 3 hours in the absence of a solvent to give a prepolymer (R value = 3.5).

654 g of the obtained prepolymer was dissolved in 1285 g of DMAc,, 37.84 g of ethylene glycol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 156,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 1.

(Example 6)

In a nitrogen gas stream, 470 g of copolymerized PTMG (3M-PTMG) having a molecular weight of 2,000 was reacted with 159.57 g of H6XDI with a trans/cis ratio of 80/20 at 100°C for 3 hours in the absence of a solvent to give a prepolymer (R value = 3.5).

626 g of the obtained prepolymer was dissolved in 1260 g of DMAc, 52.58 g of 1,4-butanediol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 164,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 1.

(Example 7)

Into a twin-screw extruder with an L/D ratio of 40, PTMG having a molecular weight of 2, 000, H6XDI with a trans/cis ratio of 80/20 and 1, 4-butanediol were continuously fed so as to give a molar ratio of 1 : 3.5 : 2.54 under a nitrogen seal, so that the reaction was carried out via the one-shot process. The reaction temperature was 240°C. The produced polyurethane was discharged as a strand with about $\phi$ 3 mm, cooled with water, and then cut into a pellet. The weight average molecular weight of the obtained polyurethane was 178, 000 in terms of polystyrene. The melt viscosity thereof at 220°C was 200 poise at a shear rate of 1000 sec$^{-1}$.

The obtained pellet was pre-dried in a batch vacuum dryer at 80°C for 12 hours. After dried, the pellet was melted using a single-screw extruder, and the resultant melt was metered with a gear pump and discharged from a spinneret to a spinning cell (cylinder) in which cooling air was flowing. The melt spinning was performed at a rate of 520 m per minute while the speed ratio between a Godet roller and a winder was set at 1.42 to wind up a yarn of 20 DTEX. The properties of the obtained yarn and the surface quality of the resultant elastic fabric are shown in Table 2.

(Example 8)

Under the same conditions as in Example 7 except that 3M-PTMG having a molecular weight of 2,000 was used in place of PTMG having a molecular weight of 2,000, the polymerization of a polyurethane and the melt spinning were carried out to obtain a yarn of 20 DTEX. The weight average molecular weight of the obtained polyurethane was 185, 000 in terms of polystyrene. The melt viscosity thereof at 220°C was 200 poise at a shear rate of 1000 sec$^{-1}$. The properties of the obtained yarn and the surface quality of the resultant elastic fabric are shown in Table 2.

(Example 9)

Polyethylene glycol (PEG) having a molecular weight of 2, 000, H6XDI with a trans/cis ratio of 85/15 and 1, 4-butanediol were continuously fed into a twin-screw extruder under a nitrogen seal so as to give a molar ratio of 1 : 2.5 : 1.52, so that the reaction was carried out via the one-shot process. The reaction temperature was 260°C. The produced polyurethane was discharged as a strand with about $\phi$ 3 mm, cooled and then cut into a pellet. The Shore A hardness of the obtained polyurethane was 90. The melt viscosity thereof at 220°C was 220 poise at a shear rate of 1000 sec-1.

The obtained pellet was pre-dried in a batch vacuum dryer at 80°C for 12 hours. After dried, the pellet was melted using a single-screw extruder, and the resultant melt was metered with a gear pump and discharged from a spinneret to a spinning cell (cylinder) in which cooling air was flowing. The melt spinning was performed at a rate of 520 m per minute while the speed ratio between a Godet roller and a winder was set at 1.42 to wind up a yarn of 20 DTEX. The properties of the obtained yarn and the surface quality of the resultant elastic fabric are shown in Table 2.

(Example 10)

Under the same conditions as in Example 9 except that polyethylene glycol (PEG) having a molecular weight of 2,000, H6XDI with a trans/cis ratio of 85/15 and 1,4-butanediol were fed in a molar ratio of 1 : 2.75 : 1.76, the polymerization of a polyurethane, the melt spinning and heat-aging were carried out to give a yarn of 20 DTEX. The Shore A hardness of the obtained polyurethane was 90. The melt viscosity thereof at 220°C was 230 poise at a shear rate of 1000 sec-1. The properties of the obtained yarn and the surface quality of the resultant elastic fabric are shown in Table 2.

(Example 11)

Under the same conditions as in Example 9 except that polyethylene glycol (PEG) having a molecular weight of 2,000, H6XDI with a trans/cis ratio of 85/15 and 1,4-butanediol were fed in a molar ratio of 1 : 3.00 : 2.01, the polymerization of a polyurethane, the melt spinning and heat-aging were carried out to give a yarn of 20 DTEX. The Shore A hardness of the obtained polyurethane was 90. The melt viscosity thereof at 220°C was 250 poise at a shear rate of 1000 sec-1. The properties of the obtained yarn and the surface quality of the resultant elastic fabric are shown in Table 2.

(Comparative Example 1)

In a nitrogen gas stream, 500 g of polytetramethylene ether glycol (PTMG) having a molecular weight of 2,000 was reacted with 145.5 g of H6XDI with a trans/cis ratio of 65/35 at 100°C for 3 hours in the absence of a solvent to give a prepolymer (R value = 3).

640 g of the obtained prepolymer was dissolved in 1246 g of DMAc, 30.74 g of ethylene glycol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 172,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 3.

(Comparative Example 2)

A polyurethane polymer solution was prepared under the same conditions as in Comparative Example 1 except that the trans/cis ratio of H6XDI was 97/3. The weight average molecular weight of the obtained polyurethane was 181, 000 in terms of polystyrene. The polyurethane polymer solution was mixed with the additive solution to prepare a spinning dope as in Example 1. While an attempt of spinning was made, the stability of the solution was very poor. The spinning dope gelled 24 hours after being prepared, and became unspinnable.

(Comparative Example 3)

In a nitrogen gas stream, 470 g of PTMG having a molecular weight of 2,000 was reacted with 176.25 g of MDI at 90°C for 2 hours in the absence of a solvent to give a prepolymer (R value = 3).

640 g of the obtained prepolymer was dissolved in 1242 g of DMAc, 28.86 g of ethylene glycol was added thereto, and then the solution was further stirred at 65°C. The reaction solution was sampled to check the viscosity. When the viscosity at 40°C exceeded 300 Pa·s, n-butanol was added to stop the reaction, whereby a viscous polymer solution having a concentration of 35 weight% was obtained. The weight average molecular weight of the obtained polyurethane was 159,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 3.

(Comparative Example 4)

In a nitrogen gas stream, 470 g of polytetramethylene ether glycol (PTMG) having a molecular weight of 2,000 was reacted with 184.71 g of 4, 4'-dicyclohexylmethane diisocyanate at 100°C for 3 hours in the absence of a solvent to give a prepolymer (R value = 3).

650 g of the obtained prepolymer was dissolved in 1261 g of DMAc, 28.93 g of ethylene glycol was added thereto, bismuth octanoate was added as a catalyst, and then the solution was further stirred at 80°C. The reaction solution was sampled to check the viscosity. When the viscosity at 40°C exceeded 300 Pa·s, diethylamine was added to stop the reaction, whereby a viscous polymer solution having a concentration of 35 weight% was obtained. The weight average molecular weight of the obtained polyurethane was 191,000 in terms of polystyrene.

This polyurethane polymer solution was mixed with the additive solution to prepare a spinning dope, and spinning was performed as in Example 1 to obtain a yarn of 20 DTEX. The properties of the obtained yarn and the surface quality of the resultant elastic fabric are shown in Table 3.

(Comparative Example 5)

Polytetramethylene ether glycol (PTMG) having a molecular weight of 2,000, MDI and 1,4-butanediol were continuously fed into a twin-screw extruder under a nitrogen seal so as to give a molar ratio of 1 : 3.0 : 2.01, so that the reaction was carried out via the one-shot process. The reaction temperature was 240°C. The produced polyurethane was discharged as a strand with about $\phi$ 3 mm, cooled and then cut into a pellet. The Shore A hardness of the obtained polyurethane was 85. The melt viscosity thereof at 220°C was 90 poise at a shear rate of 1000 sec$^{-1}$.

The obtained pellet was pre-dried in a batch vacuum dryer at 80°C for 12 hours. After dried, the pellet was melted using a single-screw extruder, and the resultant melt was metered with a gear pump and discharged from a spinneret to a spinning cell (cylinder) in which cooling air was flowing. The melt spinning was performed at a rate of 520 m per minute while the speed ratio between a Godet roller and a winder was set at 1.42 to wind up a yarn of 20 DTEX. The properties of the obtained yarn and the surface quality of the resultant elastic fabric are shown in Table 4.

(Comparative Example 6)

Under the same conditions as in Comparative Example 5 except that polyethylene glycol (PEG) having a molecular weight of 2,000 was used, the polymerization of a polyurethane and the melt spinning were carried out to obtain a yarn of 20 DTEX. The Shore A hardness of the obtained polyurethane was 90. The melt viscosity thereof at 220°C was 50 poise at a shear rate of 1000 sec$^{-1}$. The properties of the obtained yarn and the surface quality of the resultant elastic fabric are shown in Table 4.

[Table 1]

| | Example 1 | Example 2 | Example 3 | Example 4 | Example 5 | Example 6 |
|---|---|---|---|---|---|---|
| Polyol | PTMG | PTMG | PTMG | PTMG | 3M-PTMG | 3M-PTMG |
| Molecular weight of polyol | 2000 | 2000 | 2000 | 2000 | 2000 | 2000 |
| Diisocyanate compound | H6XDI | H6XDI | H6XDI | H6XDI | H6XDI | H6XDI |
| Trans/cis ratio | 80/20 | 85/15 | 80/20 | 80/20 | 80/20 | 80/20 |
| R value | 3.0 | 3.0 | 3.5 | 3.5 | 3.5 | 3.5 |
| Diol compound | Ethylene glycol | Ethylene glycol | Ethylene glycol | 1,4-Butanediol | Ethylene glycol | 1,4-Butanediol |
| Polymerization method | Solution polymerization | Solution polymerization | Solution polymerization | Solution polymerization | Solution polymerization | Solution polymerization |
| Weight average molecular weight | 161000 | 154000 | 139000 | 143000 | 156000 | 164000 |
| Spinning method | Dry spinning | Dry spinning | Dry spinning | Dry spinning | Dry spinning | Dry spinning |
| Fineness (DTEX) | 20 | 20 | 20 | 20 | 20 | 20 |
| Stress at 100% elongation (cN) | 2.67 | 2.76 | 2.82 | 2.91 | 2.77 | 2.81 |
| Stress at 200% elongation (cN) | 4.96 | 5.11 | 5.22 | 5.32 | 5.15 | 5.19 |
| Recovery force at 100% elongation (cN) | 0.36 | 0.37 | 0.38 | 0.39 | 0.42 | 0.41 |
| Recovery force at 200% elongation (cN) | 0.77 | 0.78 | 0.79 | 0.81 | 0.85 | 0.83 |
| Breaking elongation (%) | 400 | 400 | 400 | 410 | 440 | 450 |
| Breaking strength (cN) | 26 | 27 | 28 | 28 | 26 | 28 |

(continued)

| | Example 1 | Example 2 | Example 3 | Example 4 | Example 5 | Example 6 |
|---|---|---|---|---|---|---|
| Softening point (°C) | 170 | 170 | 175 | 180 | 175 | 180 |
| Surface quality of elastic fabric | B | B | A | A | A | A |

[Table 2]

| | Example 7 | Example 8 | Example 9 | Example 10 | Example 11 |
|---|---|---|---|---|---|
| Polyol | PTMG | 3M-PTMG | PEG | PEG | PEG |
| Molecular weight of polyol | 2000 | 2000 | 2000 | 2000 | 2000 |
| Diisocyanate compound | H6XDI | H6XDI | H6XDI | H6XDI | H6XDI |
| Trans/cis ratio | 80/20 | 80/20 | 85/15 | 85/15 | 85/15 |
| R value | 3.5 | 3.5 | 2.5 | 3.0 | 3.5 |
| Diol compound | 1,4-Butanediol | 1,4-Butanediol | 1,4-Butanediol | 1,4-Butanediol | 1,4-Butanediol |
| Polymerization method | Melt polymerization | Melt polymerization | Melt polymerization | Melt polymerization | Melt polymerization |
| Weight average molecular weight | 178000 | 185000 | - | - | - |
| Hardness (Shore A) | 85 | 80 | 90 | 90 | 90 |
| Spinning method | Melt spinning | Melt spinning | Melt spinning | Melt spinning | Melt spinning |
| Fineness (DTEX) | 20 | 20 | 20 | 20 | 20 |
| Stress at 100% elongation (cN) | 3.21 | 3.09 | 4.57 | 5.64 | 8.80 |
| Stress at 200% elongation (cN) | 5.59 | 5.45 | 7.06 | 7.95 | 12.00 |
| Recovery force at 100% elongation (cN) | 0.37 | 0.39 | 0.36 | 0.35 | 0.35 |
| Recovery force at 200% elongation (cN) | 0.78 | 0.81 | 1.05 | 1.10 | 0.95 |
| Breaking elongation (%) | 430 | 440 | 400 | 380 | 360 |
| Breaking strength (cN) | 26 | 26 | 24 | 26 | 28 |
| Softening point (°C) | 185 | 185 | 180 | 185 | 185 |
| Surface quality of elastic fabric | A | A | A | A | A |

[Table 3]

| | Comparative Example 1 | Comparative Example 2 | Comparative Example 3 | Comparative Example 4 |
|---|---|---|---|---|
| Polyol | PTMG | PTMG | PTMG | PTMG |
| Molecular weight of polyol | 2000 | 2000 | 2000 | 2000 |

13

(continued)

|  | Comparative Example 1 | Comparative Example 2 | Comparative Example 3 | Comparative Example 4 |
|---|---|---|---|---|
| Diisocyanate compound | H6XDI | H6XDI | MDI | H12MDI |
| Trans/cis ratio | 65/35 | 97/3 | NA | NA |
| R value | 3.0 | 3.0 | 3.0 | 3.0 |
| Diol compound | Ethylene glycol | Ethylene glycol | Ethylene glycol | Ethylene glycol |
| Polymerization method | Solution polymerization | Solution polymerization | Solution polymerization | Solution polymerization |
| Weight average molecular weight | 172000 | 181000 | 159000 | 191000 |
| Spinning method | Dry spinning | Dry spinning | Dry spinning | Dry spinning |
| Fineness (DTEX) | 20 | 20 | 20 | 20 |
| Stress at 100% elongation (cN) | 2.15 | Unspinnable | 1.63 | 1.15 |
| Stress at 200% elongation (cN) | 4.55 | Unspinnable | 4.27 | 2.65 |
| Recovery force at 100% elongation (cN) | 0.29 | Unspinnable | 0.26 | 0.19 |
| Recovery force at 200% elongation (cN) | 0.57 | Unspinnable | 0.52 | 0.38 |
| Breaking elongation (%) | 420 | Unspinnable | 390 | 450 |
| Breaking strength (cN) | 22 | Unspinnable | 25 | 18 |
| Softening point (°C) | 160 | Unmeasurable | 180 | 150 |
| Surface quality of elastic fabric | C | - | B | C |

[Table 4]

|  | Comparative Example 5 | Comparative Example 6 |
|---|---|---|
| Polyol | PTMG | PEG |
| Molecular weight of polyol | 2000 | 2000 |
| Diisocyanate compound | MDI | MDI |
| Trans/cis ratio | NA | NA |
| R value | 3.0 | 3.0 |
| Diol compound | 1,4-Butanediol | 1,4-Butanediol |
| Polymerization method | Melt polymerization | Melt polymerization |
| Hardness (Shore A) | 85 | 90 |
| Spinning method | Melt spinning | Melt spinning |

(continued)

| | Comparative Example 5 | Comparative Example 6 |
|---|---|---|
| Fineness (DTEX) | 20 | 20 |
| Stress at 100% elongation (cN) | 1.55 | 1.35 |
| Stress at 200% elongation (cN) | 4.24 | 3.56 |
| Recovery force at 100% elongation (cN) | 0.25 | 0.20 |
| Recovery force at 200% elongation (cN) | 0.46 | 0.40 |
| Breaking elongation (%) | 400 | 480 |
| Breaking strength (cN) | 21 | 15 |
| Softening point (°C) | 160 | 150 |
| Surface quality of elastic fabric | C | C |

INDUSTRIAL APPLICABILITY

According to the present invention, there is provided a polyurethane elastic fiber that is remarkably reduced in the yellowing of the fiber, enhanced in the stress and recovery force at 100 to 200% elongation which is the region of actual use, and also excellent in heat resistance. Thus, the polyurethane elastic fiber of the invention can be used in a wide variety of applications including uses for stretchable clothes such as legwear, innerwear and sportswear, sanitary articles (sanitary materials) such as disposable diapers and sanitary napkins, and industrial materials.

**Claims**

1. A polyurethane elastic fiber comprising a polyurethane polymerized from a polyol, an organic diisocyanate compound, and a diol compound, wherein the organic diisocyanate compound contains at least 1,4-bis(isocyanatomethyl)cyclohexane, and the trans/cis isomer ratio of the 1,4-bis(isocyanatomethyl)cyclohexane is 70/30 to 95/5.

2. The polyurethane elastic fiber according to claim 1, wherein the polyol is a polyether polyol.

3. The polyurethane elastic fiber according to claim 1 or 2, wherein the diol compound contains at least ethylene glycol or 1,4-butanediol.

4. A polyurethane elastic fiber comprising a polyurethane having a structure that can be formed by polymerizing a polyol, an organic diisocyanate compound, and a diol compound, wherein the structure of a part that can be derived from the organic diisocyanate compound is a structure that can be formed from an organic diisocyanate compound containing at least 1,4-bis(isocyanatomethyl)cyclohexane having a trans/cis isomer ratio of 70/30 to 95/5.

5. The polyurethane elastic fiber according to claim 4, wherein the structure of a part that can be derived from the polyol is a structure that can be formed from a polyether polyol.

6. The polyurethane elastic fiber according to claim 4 or 5, wherein the structure of a part that can be derived from the diol compound includes at least a structure that can be formed from ethylene glycol or 1,4-butanediol.

7. The polyurethane elastic fiber according to any one of claims 1 to 6, wherein the polyurethane has a weight average molecular weight of 50, 000 to 200, 000 in terms of polystyrene.

8. A method for manufacturing a polyurethane elastic fiber, the method comprising polymerizing a polyol, an organic diisocyanate compound, and a diol compound to prepare a polyurethane, and spinning the polyurethane to obtain a polyurethane elastic fiber, wherein at least 1,4-bis(isocyanatomethyl)cyclohexane is used as the organic diisocyanate compound, and the trans/cis isomer ratio of the 1,4-bis(isocyanatomethyl)cyclohexane is 70/30 to 95/5.

9. The method according to claim 8, wherein the equivalent ratio (molar ratio) of the polyol to the organic diisocyanate compound in the reaction is 1 : 1.5 to 1 : 4.5.

10. The method according to claim 8 or 9, wherein the polyurethane is prepared by a solution polymerization method, and a spinning dope having a polyurethane concentration of 20 to 50 weight% is spun into a polyurethane elastic fiber.

11. An elastic fabric comprising the polyurethane elastic fiber recited in any one of claims 1 to 7, or the polyurethane elastic fiber manufactured by the method recited in any one of claims 8 to 10.

**INTERNATIONAL SEARCH REPORT**

| International application No. |
| --- |
| PCT/JP2012/082201 |

A.  CLASSIFICATION OF SUBJECT MATTER
*D01F6/70*(2006.01)i, *C08G18/75*(2006.01)i, *D04B21/00*(2006.01)i

According to International Patent Classification (IPC) or to both national classification and IPC

B.  FIELDS SEARCHED

Minimum documentation searched (classification system followed by classification symbols)
D01F6/70, C08G18/75, D04B21/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | WO 2009/051114 A1 (Mitsui Chemicals Polyurethanes, Inc.), 23 April 2009 (23.04.2009), paragraphs [0028] to [0030], [0109], [0159] to [0161]; examples, tables 1 to 11; claims & US 2010/0216905 A1 paragraphs [0048] to [0051], [0184], [0185], [0278] to [0280]; tables 1 to 11 of examples; claims & JP 2009-138182 A        & EP 2204395 A1 & CN 101821309 A        & KR 10-2010-0083140 A | 1-11 |

| ☒ | Further documents are listed in the continuation of Box C. | ☐ | See patent family annex. |

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| 11 March, 2013 (11.03.13) | 19 March, 2013 (19.03.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/082201

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-504849 A (Dow Global Technologies Inc.), 09 February 2006 (09.02.2006), claims & US 2006/0058453 A1 claims & JP 2011-46968 A & US 2007/0265388 A1 & WO 2004/041890 A1 & KR 10-2005-0059308 A & CN 1708524 A | 1-11 |
| A | JP 2006-504843 A (Dow Global Technologies Inc.), 09 February 2006 (09.02.2006), claims & US 2004/0087754 A1 claims & WO 2004/041899 A1 & KR 10-2005-0065658 A & CN 1708527 A | 1-11 |

Form PCT/ISA/210 (continuation of second sheet) (July 2009)

**EP 2 829 642 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10226921 A
- JP 2002517533 A
- JP 2615131 B